# EUROPÄISCHE PATENTSCHRIFT

(11) **EP 1 758 758 B1**
(45) Veröffentlichungstag und Bekanntmachung des Hinweises auf die Patenterteilung: **11.02.2009**
(21) Anmeldenummer: 05739517.0
(22) Anmeldetag: 11.04.2005
(51) Int. Cl.: B60N 2/02

(54) **VERFAHREN ZUR REGELUNG EINER ELEKTRISCHEN VERSTELLEINRICHTUNG**
METHOD FOR THE REGULATION OF AN ELECTRICAL ADJUSTING MECHANISM
PROCEDE POUR REGULER UN DISPOSITIF DE REGLAGE ELECTRIQUE

(30) Priorität: 22.06.2004 DE 102004030055
(43) Veröffentlichungstag der Anmeldung: 07.03.2007
(73) Patentinhaber: Bayerische MotorenWerke Aktiengesellschaft, 80809 München (DE)
(72) Erfinder: BAUR, Richard, 85276 Pfaffenhofen (DE); URBAHN, Jan, Ramsey, NJ 07446 (US)
(86) Internationale Anmeldenummer: PCT/EP2005/003784
(87) Internationale Veröffentlichungsnummer: WO 2005/123444

(56) Entgegenhaltungen:
- DE-A1- 19 522 897
- DE-U1- 20 219 882

## Beschreibung

Die Erfindung betrifft ein Verfahren zur Regelung einer fahrerbezogenen elektrischen Verstelleinrichtung mit einer Regeleinheit, die Bediensignale verarbeitet, welche von einem Benutzer durch die Betätigung von Eingabeelementen erzeugt werden, bei welchem die Wirkung der Bediensignale auf die Bewegung einer Fahrzeugkomponente, insbesondere eines Fahrzeugsitzes, in Abhängigkeit von Fahrzeugzustandssignalen, insbesondere der Fahrzeuggeschwindigkeit, so eingeschränkt wird, dass die Fahrzeugkomponente nicht in eine sicherheitskritische Stellung bewegt wird.

Gemäß dem Stand der Technik werden in modernen Kraftfahrzeugen zur Erhöhung des Komforts des Benutzers fahrerbezogene elektrische Verstelleinrichtungen, etwa für Kraftfahrzeugsitze oder Kraftfahrzeuglenkräder, vorgesehen. Eine solche elektrische Verstelleinrichtung ist für einen Kraftfahrzeugsitz bekannt aus der DE 195 22 897 C1. Typischerweise umfasst eine fahrerbezogene elektrische Verstelleinrichtung Antriebselemente zur mechanischen Bewegung einer Kraftfahrzeugkomponente (z. B. Kraftfahrzeugsitz oder Kraftfahrzeuglenkrad), Bedienelemente (z. B. Schalter oder multifunktionale Bedieneinheiten), welche vom Benutzer zur Vorgabe einer gewünschten Bewegung betätigt werden, sowie eine Regeleinheit, in welcher elektrische Eingangssignale in Stellsignale umgesetzt werden. Ein Teil der Eingangssignale der Regeleinheit kann vom Benutzer durch das Betätigen der Eingabeelemente beeinflusst werden und liefert der Regeleinheit somit Information über getätigte Eingaben. Solche Eingangssignale werden im Folgenden als Bediensignale bezeichnet. Die Antriebselemente werden angesteuert durch Stellsignale, welche von der Regeleinheit ausgegeben werden.

Durch eine fahrerbezogene elektrische Verstelleinrichtung wird der Komfort des Benutzers eines Kraftfahrzeugs erhöht. Dem stehen Sicherheitsrisiken gegenüber, die durch technische Fehler sowie durch unsachgemäße oder unabsichtliche Betätigung der Bedienelemente verursacht werden können. Beispielsweise kann in Abwesenheit weiterer Sicherheitsvorkehrungen bereits ein technischer Einfachfehler (z. B. Abfall oder Sättigung eines Spannungspegels in Folge eines technischen Defekts), eine irrtümliche Eingabe in eine multifunktionale Bedieneinheit oder das Verklemmen eines Schalters dazu führen, dass ein Kraftfahrzeugsitz während der Fahrt des Kraftfahrzeugs in eine Sitzstellung bewegt wird, in welcher der Fahrer des Kraftfahrzeugs die Pedale des Kraftfahrzeugs, insbesondere das Bremspedal, nicht oder nur eingeschränkt bedienen kann. Ebenso kann eine Kraftfahrzeugkomponente in Abwesenheit weiterer Sicherheitsvorkehrungen in eine Stellung bewegt werden, in welcher die Funktion bestimmter passiver Sicherheitseinrichtungen zum Schutz der Fahrzeuginsassen nicht gewährleistet ist, d. h. in welcher diese Einrichtungen nicht ihre volle Wirkung entfalten oder ihrerseits ein Sicherheitsrisiko darstellen (z. B. Mindestabstand zum Airbag durch veränderte Sitzstellung unterschritten).

Zur Verhinderung solcher Sicherheitsrisiken sind bisher nur unzureichende Sicherheitsmaßnahmen bekannt. Beispielsweise ist es üblich, in der Bedienungsanleitung des Kraftfahrzeugs oder an den Bedienelementen selbst Wamhinweise vorzusehen, dass während der Fahrt des Kraftfahrzeugs eine Betätigung der Bedienelemente untersagt ist. Eine solche, nicht gerätetechnisch umgesetzte, Sicherheitsvorkehrung weist jedoch den Nachteil auf, dass sie von einem Benutzer des Kraftfahrzeugs leicht ignoriert oder bewusst missachtet werden kann.

Gerätetechnisch umgesetzte Sicherheitsvorkehrungen, die sicherheitskritische Bewegungen einer fahrerbezogen elektrisch verstellbaren Kraftfahrzeugkomponente ausschließen, sind beispielsweise bekannt aus der DE 202 19 882 U1. Dort ist eine Verstellvorrichtung fuer den Sitz eines Kraftfahrzeuges offenbart, bestehend aus einem oder mehreren Antriebsaggregaten, mittels denen der Sitz horizontal und/oder vertikal und/oder dessen Rueckenlehne um eine Achse verstellbar ist, wobei den Antriebsaggregaten eine an den Stromkreis des Kraftfahrzeuges angeschlossene Steuervorrichtung zugeordnet ist, der in Abhaengigkeit von der Geschwindigkeit des Kraftfahrzeuges Messsignale zufuehrbar sind, und die Antriebsaggregate aufgrund der Messsignale durch die Steuervorrichtung steuerbar sind.

Aufgabe der Erfindung ist es, ein Verfahren zur Regelung einer fahrerbezogenen elektrischen Verstelleinrichtung zu schaffen, durch welches die Bedienbarkeit der Verstelleinrichtung so eingeschränkt wird, dass Bewegungen der fahrerbezogen verstellbar ausgeführten Kraftfahrzeugkomponente in eine sicherheitskritische Stellung verhindert werden, ohne die Verfügbarkeit der Verstelleinrichtung übermäßig zu beeinträchtigen.

Gelöst wird die Aufgabe gemäß den drei Alternativen, die im kennzeichnenden Teil des unabhängigen Verfahrensanspruchs angegeben sind, durch ein Regelungsverfahren, in welchem die Wirkung der Bediensignale auf die zur Bewegung der Kraftfahrzeugkomponente führenden Stellsignale in Abhängigkeit von den Betriebszuständen des Fahrzeugs eingeschränkt wird.

Der Hauptvorteil der Erfindung besteht darin, dass Bewegungen der Kraftfahrzeugkomponente in eine sicherheitskritische Stellung durch ein solches Verfahren sowohl bei unsachgemäßer Betätigung der Bedienelemente als auch bei technischen Defekten an den Eingabeelementen oder den Zuleitungen der Regeleinheit vermieden werden können.

Durch die Erfindung kann für den Benutzer der Komfort der fahrerbezogenen elektrischen Verstelleinrichtung weitgehend erhalten bleiben, indem die Bewegung der fahrerbezogen verstellbaren Kraftfahrzeugkomponente nur soweit eingeschränkt wird, wie dies aus sicherheitstechnischer Sicht erforderlich ist.

Der erfinderische Gedanke kann besonders vorteilhaft umgesetzt werden, wenn die Fahrzeuggeschwindigkeit als einer der Betriebszustände des Kraftfahrzeugs Berücksichtigung findet. Diese Berücksichtigung kann beispielsweise erfolgen, indem die Wirkung der Bediensignale auf die Bewegung der Kraftfahrzeugkomponente mit zunehmender Fahrzeuggeschwindigkeit im Wesentlichen, d. h. unter ansonsten identischen Bedingungen, monoton verringert wird.

Gemäß der ersten, im kennzeichnenden Teil des Anspruchs 1 angegebenen erfindungsgemäßen Alternative, werden Bewegungen der Kraftfahrzeugkomponente in eine sicherheitskritische Stellung dadurch vermieden, dass die Bewegung der Kraftfahrzeugkomponente auf eine bestimmte Zeitspanne nach dem Zeitpunkt der letzten wesentlichen Veränderung der Bediensignale eingeschränkt wird. Auf diese Weise kann erreicht werden, dass für den Benutzer ein geringfügiges Verstellen der Stellung der Kraftfahrzeugkomponente zu Komfortzwecken durch kurzzeitige Betätigung der Bedienelemente möglich ist, während eine Verklemmung eines Bedienelements oder ein vergleichbarer technischer Defekt nur eine eingeschränkte und somit nicht sicherheitskritische Bewegung der Kraftfahrzeugkomponente zur Folge hat.

Gemäß der zweiten, im kennzeichnenden Teil des Anspruchs 1 angegebenen erfindungsgemäßen Alternative, werden für den Benutzer überraschende Bewegungen der Kraftfahrzeugkomponente in eine sicherheitskritische Stellung in Folge einer unabsichtlichen oder unsachgemäßen Betätigung der Bedienelemente oder eines technischen Fehlers dadurch vermieden, dass die Bewegungsgeschwindigkeit der Kraftfahrzeugkomponente auf eine bestimmte Maximalgeschwindigkeit eingeschränkt wird. Hierdurch wird erreicht, dass dem Benutzer im Falle einer irrtümlichen Betätigung der Bedienelemente ausreichend Reaktionszeit bleibt, um die Verstellbewegung abzubrechen oder eine Bewegung in entgegengesetzter Richtung einzuleiten. Im Falle eines technischen Defekts bietet diese Art der Einschränkung den Vorteil, dass dem Benutzer ausreichend Zeit bleibt, um auf die sich ungewollt verändernden Fahrbedingungen zu reagieren, beispielsweise seine Sitzposition auf dem Kraftfahrzeugsitz einer sich verändernden Sitzstellung anzupassen, und/oder einen sicheren Fahrzeughalt herbeizuführen.

Gemäß der dritten, im kennzeichnenzen Teil des Anspruchs 1 angegebenen erfindungsgemäßen Alternative, werden Bewegungen der Kraftfahrzeugkomponente in eine sicherheitskritische Stellung dadurch vermieden, dass das Ausmaß der Bewegung der Kraftfahrzeugkomponente auf einen reduzierten Wertebereich eingeschränkt wird, der kleiner oder gleich dem mechanisch möglichen Wertebereich für das Ausmaß der Bewegung der Kraftfahrzeugkomponente ist. Die dem Komfort des Benutzers dienende Möglichkeit einer Feinverstellung in geringem Ausmaß bleibt somit erhalten. Eine irrtümliche oder fehlerbedingte Verstellung in größerem und somit möglicherweise sicherheitskritischem Ausmaß wird hingegen unterbunden.

Die bisher genannten erfindungsgemäßen Alternativen besitzen den gemeinsamen Vorteil, dass der Benutzer - bei entsprechender Wahl der Regelungsparameter - in allen Stellungen der Kraftfahrzeugkomponente und in allen Betriebszuständen des Kraftfahrzeuges durch die Betätigung eines Bedienelementes, z. B. durch einen Tastendruck, eine wahrnehmbare Bewegung der fahrerbezogen verstellbar ausgeführten Kraftfahrzeugkomponente verursachen kann. Der Benutzer wird somit nicht durch eine ausbleibende Bewegung der Kraftfahrzeugkomponente verwirrt und gegebenenfalls vom Fahrgeschehen abgelenkt.

Gemäß einer vierten bevorzugten, mit allen vorangehend beschriebenen Ausführungsformen kombinierbaren, Ausführungsform der Erfindung wird als Reaktion auf eine Betätigung der Eingabeelemente, deren Wirkung durch die Regelung eingeschränkt wird, eine Rückmeldung an den Benutzer ausgegeben, welche ihm das Vorhandensein der Einschränkung signalisiert. Diese Rückmeldung kann visuell, auditorisch oder haptisch auf den Benutzer wirken. Zum Auslösen einer solchen Rückmeldung werden von der Regeleinheit Signale ausgegeben, die im Folgenden als Anzeigesignale bezeichnet werden. Der Benutzer wird somit nicht durch eine ausbleibende oder unerwartet geringe Bewegung der Kraftfahrzeugkomponente verwirrt und gegebenenfalls vom Fahrgeschehen abgelenkt.

Eine solche Rückmeldung kann auch in Stellungen der Kraftfahrzeugkomponente und in Betriebszuständen vorgesehen werden, in denen nur ausgewählte Bedienvorgänge eine wahrnehmbare Bewegung der Kraftfahrzeugkomponente zur Folge haben - beispielsweise an den Grenzen des mechanisch möglichen oder regelungstechnisch reduzierten Wertebereichs. Alternativ hierzu können im Falle einer regelungstechnisch reduzierten Einschränkung der Verstellbarkeit auf die Betätigung ausgewählter Bedienelemente die Kriterien der Regelung geringfügig modifiziert werden, um bei einer beliebigen Betätigung eines Bedienelements bzw. in möglichst vielen Fällen der Betätigung eines Bedienelements eine wahrnehmbare Bewegung der Kraftfahrzeugkomponente herbeizuführen.

Anhand der beigefügten Zeichnungen wird die Erfindung am Beispiel einer elektrischen Verstelleinrichtung für einen Kraftfahrzeugsitz weiter erläutert. Dabei zeigen
- Fig. 1: eine Prinzipskizze der Verschaltung einer Regeleinheit in einer elektrischen Verstelleinrichtung für einen Kraftfahrzeugsitz,
- Fig. 2: einen beispielhaften Zusammenhang zwischen Fahrzeugzustandssignalen, hier der Fahrzeuggeschwindigkeit, und einer in einem Regelungsverfahren zur elektrischen Sitzverstellung vorgesehenen begrenzenden Zeitspanne,
- Fig. 3: einen beispielhaften Zusammenhang zwischen Fahrzeugzustandssignalen, hier der Fahrzeuggeschwindigkeit, und einer in einem Regelungsverfahren vorgesehenen Maximalgeschwindigkeit der Bewegung des Kraftfahrzeugsitzes,
- Fig. 4: einen beispielhaften Zusammenhang zwischen Fahrzeugzustandssignalen, hier der Fahrzeuggeschwindigkeit, und einem in einem Regelungsverfahren vorgesehenen reduzierten Wertebereich für die elektrische Verstellbarkeit eines Kraftfahrzeugsitzes.

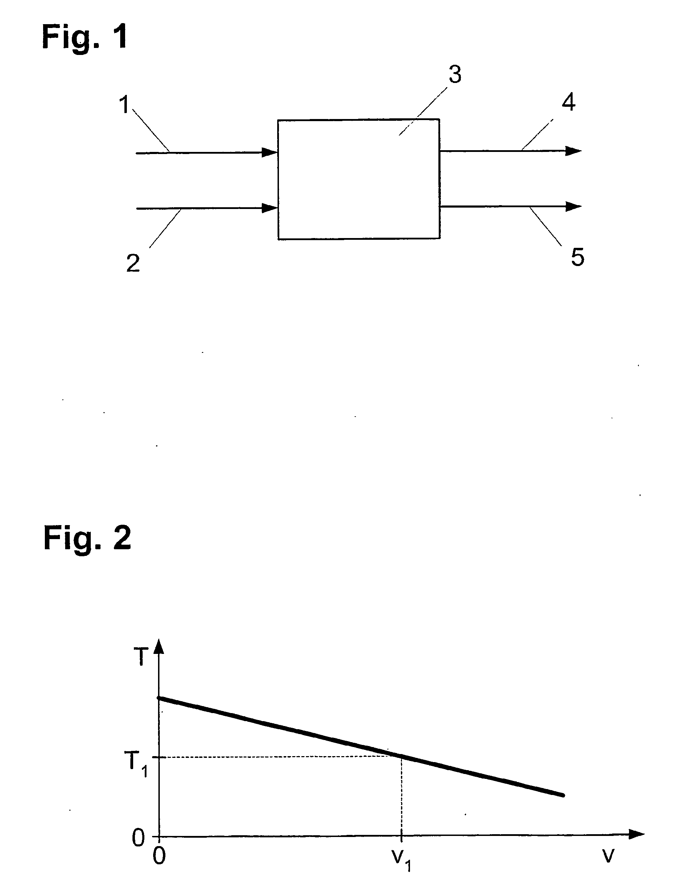

Fig. 1 zeigt eine Prinzipskizze der Verschaltung einer Regeleinheit in einer elektrischen Verstelleinrichtung für einen Kraftfahrzeugsitz. Die Eingangssignale, die in der Regeleinheit 3 verarbeitet werden, setzen sich aus zwei Signalvektoren 1, 2 zusammen. Den ersten Signalvektor 1 bilden die Bediensignale, die vom Benutzer durch die Betätigung der Eingabeelemente erzeugt oder verändert werden. Der zweite Signalvektor 2 beinhaltet Information über die Betriebszustände des Kraftfahrzeuges. Diese werden im Folgenden als Fahrzeugzustandssignale bezeichnet. Die Bediensignale 1 und die Fahrzeugzustandssignale 2 werden in der Regeleinheit 3 umgesetzt in Stellsignale 4, durch welche die Antriebselemente der Verstelleinrichtung angesteuert werden. Durch die bei dieser Umsetzung eingesetzten Regelungsverfahren wird die Verstellbarkeit der Sitzstellung auf verschiedene im Folgenden näher beschriebene Arten und Weisen so eingeschränkt, dass der Kraftfahrzeugsitz nicht in eine im aktuellen Betriebszustand des Kraftfahrzeugs sicherheitskritische Sitzstellung bewegt wird. In einem solchen Regelungsverfahren wird hierzu die Wirkung der Bediensignale 1 auf die Stellsignale 4, und somit auf die Bewegung des Kraftfahrzeugsitzes, in Abhängigkeit von den Fahrzeugzustandssignalen 2 eingeschränkt.

In Fig. 2 ist beispielhaft ein möglicher Zusammenhang zwischen Fahrzeugzustandssignalen 2 und einer in einem Regelungsverfahren zur elektrischen Sitzverstellung vorgesehenen begrenzenden Zeitspanne dargestellt. In der vorliegenden bevorzugten Ausführungsform wird der Regeleinheit 3 als ein in den Fahrzeugzustandssignalen 2 enthaltenes Eingangssignal Information zur Fahrzeuggeschwindigkeit zur Verfügung gestellt. Diese Information wird in der Regeleinheit 3 verarbeitet und bei der Einschränkung der Wirkung der Bediensignale auf eine Bewegung des Kraftfahrzeugsitzes berücksichtigt. Im vorliegenden Beispiel nimmt die Zeitspanne T mit zunehmender Fahrzeuggeschwindigkeit v streng monoton ab. Ebenso denkbar sind Ausführungsformen, in denen T durch das Potential verschiedener Klemmen im Kraftfahrzeug und/oder das Über-/Unterschreiten verschiedener Schwellen der Fahrzeuggeschwindigkeit v verändert wird. In vielen Ausführungsformen wird T dabei mit zunehmender Fahrzeuggeschwindigkeit v monoton abnehmen.

Regelungstechnisch realisiert werden kann die dieser Ausführungsform der Erfindung entsprechende Einschränkung der Verstellbarkeit gemäß der folgenden Vorgehensweise. Es wird davon ausgegangen, dass sich die Bediensignale 1 nur dann wesentlich verändern, wenn die Bedienelemente zur Sitzverstellung betätigt werden. Solche Veränderungen der Bediensignale 1 werden von der Regeleinheit 3 detektiert und lösen in dieser den Start eines Timers aus. Die Zeitspanne T, während welcher der Timer nach einem solchen Start aktiv bleibt, wird in Abhängigkeit von den Fahrzeugzustandssignalen 2 gemäß einem in der Regeleinheit 3 abgelegten Zusammenhang, beispielsweise dem in Fig. 2 dargestellten, festgelegt. Die Regelung wird so ausgelegt, dass ein für eine optimale Bedienbarkeit der Verstelleinrichtung vorgesehenes Übertragungsverhalten zwischen den Bediensignalen 1 und den Stellsignalen 4 nur dann gewährleistet ist, wenn der Timer aktiv ist. Ist der Timer abgelaufen, wird das Übertragungsverhalten so verändert, dass keine Bewegung des Kraftfahrzeugsitzes mehr erfolgt.

Betätigt der Benutzer des Kraftfahrzeugs nun bei einer Fahrzeuggeschwindigkeit v₁ die elektrische Sitzverstellung durch die Verschiebung eines Schiebeschalters und bricht den Bedienvorgang nach einer Zeitspanne T₁ₐ, die kleiner ist als T₁, wieder ab, so tritt keinerlei regelungstechnische Einschränkung der Wirkung des Bedienvorgangs in Kraft. Dauert der Bedienvorgang, etwa durch Halten des Schiebeschalters, hingegen über eine Zeitspanne T_{1b} an, die größer ist als T₁ wird die Bewegung des Kraftfahrzeugsitzes nach der Zeitspanne T₁ abgebrochen. Durch einen neuen Bedienvorgang, durch welchen der Timer in der Regeleinheit 3 neu gestartet wird, kann jedoch im Anschluss daran eine neue Bewegung ausgelöst werden.

In der vorliegenden Ausführungsform wird die Zeitspanne T₁ in Abhängigkeit von der bei der letzten wesentlichen Veränderung der Bediensignale 1 gültigen Fahrzeuggeschwindigkeit v₁ festgelegt. Als Weiterbildung des erfinderischen Gedankens kann die Zeitspanne T₁ bei bereits laufendem Timer durch eine zusätzliche Berücksichtigung des Zeitverlaufs der Fahrzeuggeschwindigkeit modifiziert werden.

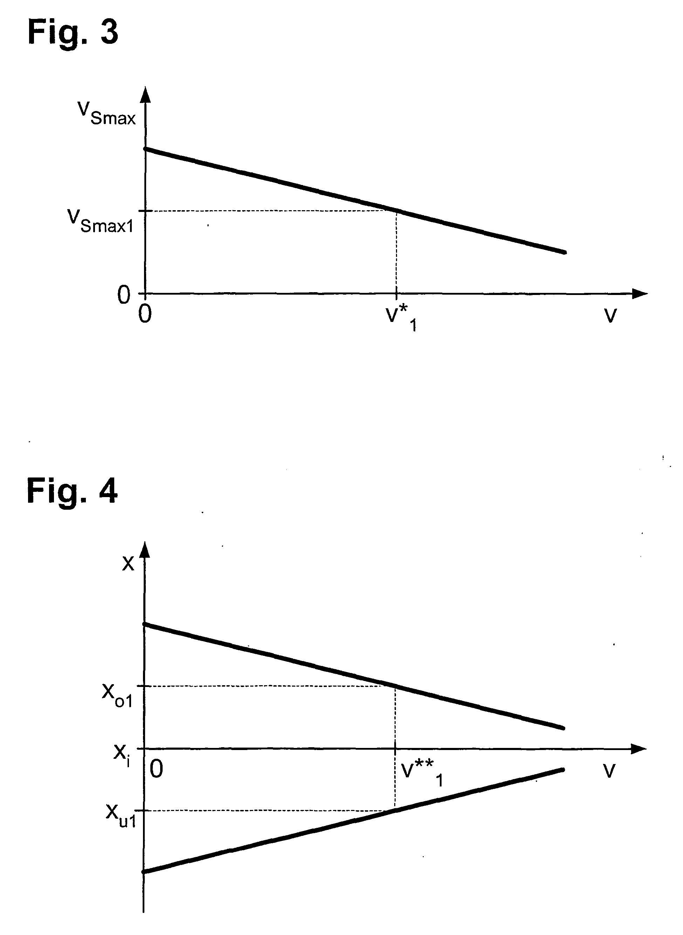

Fig. 3 zeigt beispielhaft einen möglichen Zusammenhang zwischen Fahrzeugzustandssignalen 2 und einer in einem Regelungsverfahren zur elektrischen Sitzverstellung vorgesehenen Maximalgeschwindigkeit der Bewegung des Kraftfahrzeugsitzes. Auch in dieser Ausführungsform wird in der Regeleinheit 3 die Fahrzeuggeschwindigkeit v als ein in den Fahrzeugzustandssignalen 2 enthaltenes Eingangssignal verarbeitet. Aus v wird gemäß einem in der Regeleinheit 3 abgelegten Zusammenhang zunächst eine Maximalgeschwindigkeit v_{Smax} für die Bewegung des Kraftfahrzeugsitzes bestimmt. Sinngemäß ist v_{Smax} als der Betrag einer oder mehrerer translatorischer oder rotatorischer Bewegungsgeschwindigkeiten des kompletten Kraftfahrzeugsitzes oder einzelner Komponenten des Sitzes zu verstehen. Im vorliegenden Beispiel nimmt v_{Smax} mit zunehmender Fahrzeuggeschwindigkeit v streng monoton ab. Alternativ hierzu kann v_{Smax} durch das Potential verschiedener Klemmen im Kraftfahrzeug und/oder das Über-/Unterschreiten verschiedener Schwellen der Fahrzeuggeschwindigkeit v verändert werden. In der Regel wird v_{Smax} dabei mit zunehmender Fahrzeuggeschwindigkeit v monoton abnehmen.

Eine dieser Ausführungsform der Erfindung entsprechende Einschränkung der Verstellbarkeit lässt sich regelungstechnisch durch die folgende Vorgehensweise realisieren. Die Regelung wird weitgehend so ausgelegt, dass ein für eine optimale Bedienbarkeit der Verstelleinrichtung vorgesehenes Übertragungsverhalten zwischen den Bediensignalen 1 und den Stellsignalen 4 gewährleistet ist. Werden in der Regelung nun Stellsignale 4 errechnet, die eine Bewegung des Kraftfahrzeugsitzes v_{S} zur Folge hätten, deren Betrag größer ist als v_{Smax}, so werden die Stellsignale dahingehend verändert, dass aus diesen eine Bewegung des Kraftfahrzeugsitzes folgt, deren Geschwindigkeit in etwa den Betrag v_{Smax} besitzt. Der Wert von v_{Smax} kann dabei entweder einmalig zu Beginn eines Bedienvorganges festgelegt oder laufend an die aktuelle Fahrzeuggeschwindigkeit angepasst werden.

Wird die elektrische Sitzverstellung vom Benutzer nun bei einer Fahrzeuggeschwindigkeit v*₁ betätigt, stehen dem Benutzer sämtliche gewohnten Verstellmöglichkeiten zur Verfügung. Das Verhalten der Verstelleinrichtung wird durch die Regelung lediglich dahingehend verändert, dass keine Bewegung des Kraftfahrzeugsitzes die an die aktuelle Fahrzeuggeschwindigkeit angepasste Maximalgeschwindigkeit v_{Smax} überschreitet.

Einen möglichen Zusammenhang zwischen Fahrzeugzustandssignalen 2 und einem in einem Regelungsverfahren gemäß einer weiteren bevorzugten Ausführungsform vorgesehenen reduzierten Wertebereich der Sitzstellungen eines Kraftfahrzeugsitzes zeigt beispielhaft Fig. 4. Wie in den vorhergehenden Beispielen wird in der Regeleinheit 3 als ein in den Fahrzeugzustandssignalen 2 enthaltenes Eingangssignal die Fahrzeuggeschwindigkeit v verarbeitet. Gemäß einem in der Regeleinheit 3 abgelegten Zusammenhang wird aus v und einer zu einem Initialisierungszeitpunkt festgehaltenen Sitzstellung xᵢ ein Wertebereich zulässiger Sitzstellungen [xᵤ,xₒ] festgelegt. Die Variable x beschreibt dabei eine oder mehrere translatorische oder rotatorische zur Sitzstellung beitragende Größen. Im vorliegenden Beispiel nimmt das Ausmaß xₒ - xᵤ des durch die Regelung reduzierten Wertebereichs mit zunehmender Fahrzeuggeschwindigkeit v streng monoton ab. Alternativ hierzu kann der Wertebereich [xᵤ,xₒ] durch das Potential verschiedener Klemmen im Kraftfahrzeug und/oder das Über-/Unterschreiten verschiedener Schwellen der Fahrzeuggeschwindigkeit v verändert werden. In der Regel wird das Ausmaß des Wertebereichs xₒ - xᵤ dabei mit zunehmender Fahrzeuggeschwindigkeit v monoton abnehmen.

Gemäß der folgenden Vorgehensweise kann eine dieser Ausführungsform der Erfindung entsprechende Einschränkung der Verstellbarkeit regelungstechnisch realisiert werden. Die Regelung wird so ausgelegt, dass ein für eine optimale Bedienbarkeit der Verstelleinrichtung vorgesehenes Übertragungsverhalten zwischen den Bediensignalen 1 und den Stellsignalen 4 nur dann gewährleistet ist, wenn die aktuelle Sitzstellung x im Wertebereich [xᵤ,xₒ] liegt. Die Sitzstellung x kann dabei laufend messtechnisch erfasst und/oder aus vergangenen Ausgangssignalen bestimmt werden. Wird eine Grenze des Wertebereichs erreicht, wird das Übertragungsverhalten so verändert, dass keine Bewegung des Kraftfahrzeugsitzes aus dem Wertebereich heraus möglich ist.

Der Wertebereich [xᵤ,x_{o]} beinhaltet die Sitzstellung xᵢ zu einem Initialisierungszeitpunkt Tᵢ . Der Initialisierungszeitpunkt Tᵢ, in welchem xᵢ festgelegt wird, kann dabei gewählt werden als der Zeitpunkt des Anlegens der Batteriespannung an eine Fahrzeugklemme, der Zeitpunkt des Motorstarts, der Zeitpunkt des Über- oder Unterschreitens einer relativen oder absoluten Fahrzeuggeschwindigkeitsschwelle oder der Zeitpunkt des Ablaufs eines Zeitintervalls. Die obere und untere Grenze des Wertebereichs [xᵤ,xₒ] werden entweder anhand der Betriebszustände des Kraftfahrzeuges im letzten Initialisierungszeitpunkt oder zu Beginn eines Bedienvorganges festgelegt oder sie werden laufend an die aktuellen Betriebszustände des Kraftfahrzeuges angepasst. Hierzu werden die Fahrzeugzustandssignale 2 in der Regeleinheit 3 ausgewertet.

In einer bevorzugten Ausführungsform wird das Überschreiten der Fahrzeuggeschwindigkeitsschwelle 1 km/h als erster Initialisierungszeitpunkt gewählt. Zudem werden weitere Initialisierungszeitpunkte gesetzt, wenn die Sitzstellung während der Fahrt in einem Zeitintervall von einer Minute Länge nicht verändert wurde. In jedem Initialisierungszeitpunkt wird die aktuelle Sitzstellung als xᵢ in der Regeleinheit 3 gespeichert. Der Wertebereich [xᵤ,xₒ] wird laufend an die aktuelle Fahrzeuggeschwindigkeit v angepasst.

Als vorteilhafte Weiterbildung des erfinderischen Gedankens kann das Regelungsverfahren erweitert werden, indem der Wertebereich [xᵤ,xₒ] eingeschränkt wird auf Sitzstellungen, in denen bestimmte Einrichtungen zum Schutz der Fahrzeuginsassen ihre volle Wirkung entfalten oder nicht ihrerseits ein Sicherheitsrisiko darstellen können. Etwa kann durch die Wahl des Wertebereichs sichergestellt werden, dass ein Mindestabstand eines Fahrzeuginsassen zu einem Airbag nicht unterschritten wird. Besonders vorteilhaft kann es dabei sein, wenn der Regeleinheit 3 zur Festlegung des Wertebereichs zusätzlich zu den Bediensignalen und Fahrzeugzustandssignalen Daten zu den Fahrzeuginsassen (z. B. Gewicht, Sitzposition, Augenhöhe) zur Verfügung gestellt werden. Solche Daten werden im Folgenden als Fahrzeuginsassenparameter bezeichnet.

Liegt die aktuelle Sitzstellung x in Folge einer Veränderung des Wertebereichs [xᵤ,xₒ] außerhalb des Wertebereichs [xᵤ,xₒ], wird das Übertragungsverhalten der Regelung so verändert, dass eine Bewegung des Kraftfahrzeugsitzes nur in Richtung einer Verringerung des Abstands zum aktuellen Wertebereich [xᵤ,xₒ] möglich ist. Alternativ zu dieser Vorgehensweise kann bei Verfügbarkeit einer Regeleinheit 3, die mit Mitteln zur Interpretation des Zeitverlaufs der Bewegungen des Kraftfahrzeugsitzes ausgestattet ist, nach sicherheitstechnischen Kriterien überprüft werden, ob das Verlassen des Wertebereichs durch eine Bewegung des Kraftfahrzeugsitzes erfolgt ist, deren Fortsetzung ein Sicherheitsrisiko darstellen würde. Bei einem negativen Ergebnis dieser Überprüfung kann beispielsweise eine Neuinitialisierung des Wertebereichs erfolgen. Betätigt der Benutzer die elektrische Sitzverstellung nun bei einer Fahrzeuggeschwindigkeit v**₁, stehen ihm in qualitativer Hinsicht in den meisten Fällen die gewohnten Verstellmöglichkeiten zur Verfügung. Das Verhalten der Verstelleinrichtung wird durch die Regelung lediglich dahingehend eingeschränkt, dass das Ausmaß der Bewegungen des Kraftfahrzeugsitzes auf einen reduzierten Wertebereich [xᵤ₁,xₒ₁] eingeschränkt ist, der kleiner oder gleich dem mechanischen Wertebereich für das Ausmaß der Bewegung des Sitzes ist. Erwähnenswert ist hier, dass verschiedene der genannten Varianten einer Wahl des Initialisierungszeitpunktes dazu führen, dass der Wertebereich der Sitzverstellung zwar aus Sicherheitsgründen zu jedem Zeitpunkt reduziert ist, dass dem Benutzer aber im Verlauf einer längeren Fahrt, während der eine oder mehrere Neuinitialisierungen der Regeleinheit 3 erfolgen, möglicherweise durchaus eine Verstellung über den gesamten Wertebereich der mechanischen Verstellbarkeit ermöglicht wird.

Aus Gründen der Anschaulichkeit wurde die Sitzstellung x und die Bewegungsgeschwindigkeit v_{S} des Kraftfahrzeugsitzes in den oben angeführten Beispielen als skalare Größe behandelt. Der erfinderische Gedanke schließt jedoch die Erweiterung der angestellten Überlegungen auf mehrdimensionale Sitzstellungs- und Bewegungsvektoren sowie die Anwendung auf ausgewählte Komponenten mehrdimensionaler Sitzstellungs- und Bewegungsvektoren mit ein.

Sämtliche oben beschriebenen Ausführungsformen der Erfindung sind geeignet, sicherheitskritische Bewegungen eines Kraftfahrzeugsitzes in Folge einer unsachgemäßen oder unabsichtlichen Betätigung der Bedieneinheiten einer Verstelleinrichtung bzw. eines technischen Defekts an einer Bedieneinheit oder den Zuleitungen der Regeleinheit 3 zu verhindern. Als möglicher nachteiliger Effekt einiger der beschriebenen Vorgehensweisen ist es denkbar, dass der Benutzer eines Kraftfahrzeugs durch das veränderte Verhalten der Verstelleinrichtung verwirrt wird. Etwa könnte der Benutzer denken, dass statt einer regelungstechnischen Einschränkung ein technischer Defekt vorliegt. Eine darauf folgende Fehlersuche oder ein wiederholter Test der Verstellbarkeit könnte den Benutzer vom Fahrgeschehen ablenken. Das Risiko einer solchen Reaktion des Benutzers kann durch verschiedene Maßnahmen reduziert werden. Einerseits kann als Reaktion auf eine Betätigung der Eingabeelemente, deren Wirkung durch die Regelung eingeschränkt wird, eine Rückmeldung an den Benutzer ausgegeben werden, durch welche ihm das Vorhandensein der Einschränkung signalisiert wird. Diese Rückmeldung kann visuell, auditorisch oder haptisch auf den Benutzer wirken. Etwa kann als Reaktion auf eine Betätigung eines Eingabeelemente, deren Wirkung durch die Regelung eingeschränkt wird, eine visuelle Rückmeldung an den Benutzer in Form einer optischen Ausgabe mittels einer optischen Anzeigeeinheit oder in Form eines Aufleuchtens eines Schalt- oder Anzeigeelements ausgegeben werden. Ebenso kann der Benutzer mittels einer akustischen Ausgabeeinheit eine auditorische Rückmeldung in Form einer akustischen Ausgabe, z.B. eines Signaltons oder einer Sprachausgabe, erhalten. Schließlich kann an den Benutzer als Reaktion auf eine Betätigung von Eingabeelementen, deren Wirkung regelungstechnisch eingeschränkt ist, eine haptische Rückmeldung in Form einer Veränderung des mechanischen Widerstands des betätigten Bedienelements, in Form einer mechanischen Vibration des betätigten Bedienelements oder einer anderen haptisch wahrnehmbaren Darstellungsform ausgegeben werden. Zum Auslösen einer entsprechenden Rückmeldung an den Benutzer werden von der Regeleinheit 3 Anzeigesignale 5 ausgegeben.

Eine Rückmeldung gemäß den oben beschriebenen Ausführungsformen kann auch für Sitzstellungen und Betriebszustände vorgesehen werden, in denen nur ausgewählte Bedienvorgänge eine wahrnehmbare Bewegung des Kraftfahrzeugsitzes zur Folge haben - beispielsweise an den Grenzen eines mechanischen oder regelungstechnisch reduzierten Wertebereichs. Alternativ hierzu können die beschriebenen Regelungsverfahren geringfügig dahingehend modifiziert werden, dass unabhängig vom Fahrzeugzustand durch eine beliebige Betätigung eines Bedienelements bzw. in möglichst vielen Fahrzeugzuständen durch möglichst viele Varianten einer Betätigung eines Bedienelements eine wahrnehmbare Bewegung des Kraftfahrzeugsitzes verursacht wird, deren Ausmaß aber gegebenenfalls so gering ist, dass dadurch keine Sicherheitsrisiken verursacht oder verstärkt werden.

Neben der isolierten Anwendung der genannten Maßnahmen und Verfahren zur Regelung der Verstelleinrichtung und Rückmeldung an den Bediener schließt der erfinderische Gedanke auch die Kombination mehrerer Maßnahmen und Verfahren ein.

In der bisherigen Beschreibung der Erfindung wurde die Regeleinheit 3 vereinfachend als eine einzige Komponente dargestellt. In einer gerätetechnische Umsetzung eines erfindungsgemäßen Verfahrens kann die Funktion der Regeleinheit 3 dementsprechend von einem einzigen Gerät übernommen werden. Als Alternative hierzu kann es jedoch im Hinblick auf die wirtschaftliche Umsetzung eines erfindungsgemäßen Verfahrens für verschiedene Fahrzeugtypen und Sitzmodelle vorteilhaft sein, dass einem auf Fahrzeugtyp und Sitzmodell abgestimmten Kraftfahrzeugsitzsteuergerät eine für verschiedene Fahrzeugtypen und Sitzmodelle verwendbare Vorverarbeitungseinheit vorgeschaltet wird. Die erfindungsgemäßen Verfahren zur Beschränkung der Bewegung des Kraftfahrzeugsitzes werden in einem solchen Fall im Wesentlichen in der Vorverarbeitungseinheit durchgeführt, von welcher an das Kraftfahrzeugsitzsteuergerät veränderte Eingangssignale und/oder Beschränkungsparameter ausgegeben werden.

## Patentansprüche

1. Verfahren zur Regelung einer fahrerbezogenen elektrischen Verstelleinrichtung mit einer Regeleinheit, die Bediensignale verarbeitet, welche von einem Benutzer durch die Betätigung von Eingabeelementen erzeugt werden, bei welchem die Wirkung der Bediensignale auf die Bewegung einer Fahrzeugkomponente, insbesondere eines Fahrzeugsitzes, in Abhängigkeit von Fahrzeugzustandssignalen, insbesondere der Fahrzeuggeschwindigkeit, so eingeschränkt wird, dass die Fahrzeugkomponente nicht in eine sicherheitskritische Stellung bewegt wird,
**dadurch gekennzeichnet,**
**dass** eine Bewegung der Fahrzeugkomponente nur innerhalb einer bestimmten Zeitspanne nach dem Beginn einer Betätigung der Bedienelemente ausgeführt wird und/oder die Bewegungsgeschwindigkeit der Fahrzeugkomponente beschränkt wird und/oder das Ausmaß der Bewegung der Fahrzeugkomponente auf einen reduzierten Wertebereich eingeschränkt wird, der kleiner oder gleich dem mechanisch möglichen Wertebereich ist.

2. Verfahren nach Anspruch 1, **dadurch gekennzeichnet, dass**
durch eine Betätigung der Bedienelemente in jedem Betriebszustand des Kraftfahrzeugs eine vom Benutzer wahrnehmbare Bewegung der Fahrzeugkomponente verursacht wird.

3. Verfahren nach Anspruch 1 oder 2, **dadurch gekennzeichnet, dass**
die Wirkung der Bediensignale auf eine Bewegung der Fahrzeugkomponente in Abhängigkeit von Fahrzeugzustandssignalen und Insassenparametern so eingeschränkt wird, dass die Funktion von passiven Sicherheitseinrichtungen des Kraftfahrzeuges gewährleistet ist.

4. Verfahren nach einem der Ansprüche 1 bis 3, **dadurch gekennzeichnet, dass** die Zeitspanne mit zunehmender Fahrzeuggeschwindigkeit gemäß einem monotonen Zusammenhang verringert wird.

5. Verfahren nach einem der Ansprüche 1 bis 4, **dadurch gekennzeichnet, dass** die maximale Bewegungsgeschwindigkeit der Fahrzeugkomponente mit zunehmender Fahrzeuggeschwindigkeit gemäß einem monotonen Zusammenhang verringert wird.

6. Verfahren nach einem der Ansprüche 1 bis 5, **dadurch gekennzeichnet, dass** der reduzierte Wertebereich die Stellung der Fahrzeugkomponente zu einem Initialisierungszeitpunkt beinhaltet.

7. Verfahren nach Anspruch 6, **dadurch gekennzeichnet, dass** als Initialisierungszeitpunkt der Zeitpunkt des Anlegens der Batteriespannung an eine Fahrzeugklemme, der Zeitpunkt des Motorstarts, der Zeitpunkt des Über- oder Unterschreitens einer relativen oder absoluten Fahrzeuggeschwindigkeitsschwelle oder der Zeitpunkt des Ablaufs eines Zeitintervalls gewählt wird.

8. Verfahren nach Anspruch 1, **dadurch gekennzeichnet**, der Wertebereich mit zunehmender Fahrzeuggeschwindigkeit gemäß einem monotonen Zusammenhang verringert wird.

9. Verfahren nach einem der Ansprüche 1 bis 8, **dadurch gekennzeichnet, dass** als Reaktion auf eine Betätigung der Eingabeelemente, deren Wirkung durch das Verfahren eingeschränkt wird, eine Rückmeldung an den Benutzer ausgegeben wird.

## Claims

1. A method for controlling a driver-related electric adjustment device with a control unit, which processes operating signals, which are produced by a user by the actuation of input elements, in which the action of the operating signals on the movement of a vehicle component, more especially a vehicle seat, is restricted as a function of vehicle state signals, more especially the vehicle speed, in such a way that the vehicle component is not moved into a safety-critical position, **characterised in that** a movement of the vehicle component is only carried out within a specific time span after the beginning of an actuation of the operating elements and/or the movement speed of the vehicle component is limited and/or the extent of the movement of the vehicle component is restricted to a reduced value range, which is smaller than or equal to the mechanically possible value range.

2. A method according to claim 1, **characterised in that** a movement of the vehicle component that is perceivable by the user is caused by an actuation of the operating elements in each operating state of the motor vehicle.

3. A method according to claim 1 or 2, **characterised in that** the action of the operating signals on a movement of the vehicle component is restricted as a function of vehicle state signals and occupant parameters in such a way that the function of passive safety devices of the motor vehicle is ensured.

4. A method according to any one of claims 1 to 3, **characterised in that** the time span is reduced with increasing vehicle speed in accordance with a monotonic correlation.

5. A method according to any one of claims of 1 to 4, **characterised in that** the maximum movement speed of the vehicle component is reduced with increasing vehicle speed according to a monotonic correlation.

6. A method according to any one of claims 1 to 5, **characterised in that** the reduced value range contains the position of the vehicle component at an initialisation time.

7. A method according to claim 6, **characterised in that** the time of application of the battery voltage to a vehicle terminal, the time of the engine start, the time of exceeding or falling below a relative or absolute vehicle speed threshold or the time at which a time interval expires is selected as the initialisation time.

8. A method according to claim 1, **characterised in that** the value range is reduced with increasing vehicle speed according to a monotonic correlation.

9. A method according to any one claims 1 to 8, **characterised in that**, as a reaction to an actuation of the input elements, the effect of which is restricted by the method, a feedback is provided to the user.

## Revendications

1. Procédé de régulation d'une installation d'actionnement électrique rapportée à un conducteur comportant une unité de régulation traitant les signaux de services générés par un utilisateur qui actionne des éléments d'entrée, procédé selon lequel l'action des signaux de services est limitée au mouvement d'un composant du véhicule notamment un siège de véhicule en fonction des signaux d'état du véhicule notamment de la vitesse du véhicule de façon que le composant du véhicule ne soit pas déplacé dans une position critique pour la sécurité,
**caractérisé en ce que**
on exécute le mouvement du composant du véhicule qu'à l'intérieur d'une période définie après le début de l'actionnement des éléments de services et/ou on limite la vitesse de mouvement du composant du véhicule et/ou on limite l'amplitude du mouvement du composant du véhicule à une plage de valeurs, réduite, inférieure ou égale à la plage de valeurs mécaniquement possible.

2. Procédé selon la revendication 1,
**caractérisé en ce que**
dans chaque état de fonctionnement du véhicule, l'actionnement des éléments de services, produit un mouvement du composant du véhicule perceptible par l'utilisateur.

3. Procédé selon la revendication 1 ou 2,
**caractérisé en ce que**
l'action des signaux de services sur le mouvement des composants du véhicule est limitée en fonction des signaux d'état du véhicule et des paramètres des occupants de façon à assurer le fonctionnement des installations passives de sécurité du véhicule.

4. Procédé selon les revendications 1 à 3,
**caractérisé en ce qu'**
on diminue la période en fonction de l'augmentation de la vitesse, selon une relation monotone.

5. Procédé selon les revendications 1 à 4,
**caractérisé en ce qu'**
on diminue la vitesse de mouvement maximale du composant du véhicule en fonction de l'augmentation de la vitesse, selon une relation monotone.

6. Procédé selon les revendications 1 à 5,
**caractérisé en ce que**
la plage de valeur réduite contient la position du composant du véhicule à l'instant de l'initialisation.

7. Procédé selon la revendication 6,
**caractérisé en ce que**
on choisit comme instant d'initialisation l'instant de l'initialisation et l'instant de l'application de la tension de la batterie à la borne du véhicule, l'instant du démarrage du moteur, l'instant du dépassement vers le haut ou vers le bas d'un seuil de vitesse relative ou absolue du véhicule ou encore l'instant de la fin de l'intervalle de temps.

8. Procédé selon la revendication 1,
**caractérisé en ce qu'**
on diminue la plage de valeurs en fonction de l'augmentation de la vitesse du véhicule, selon une relation monotone.

9. Procédé selon les revendications 1 à 8,
**caractérisé en ce que**
en réaction à un actionnement des éléments d'entrée, dont l'effet est limité par le procédé, on émet un message de retour vers l'utilisateur.
